# EUROPÄISCHE PATENTSCHRIFT

(11) **EP 1 197 604 B1**
(45) Veröffentlichungstag und Bekanntmachung des Hinweises auf die Patenterteilung: **15.06.2005**
(21) Anmeldenummer: 00122040.9
(22) Anmeldetag: 11.10.2000
(51) Int. Cl.: E01F 9/06, B64F 1/20, F21V 21/00

(54) **Markierungselement für Fahrbahnen**
Road-marking stud
Plot pour marquage de routes

(43) Veröffentlichungstag der Anmeldung: 17.04.2002
(73) Patentinhaber: D. Swarovski & Co., 6112 Wattens (AT)
(72) Erfinder: Forster, Michael, 6112 Wattens (AT)
(74) Vertreter: Hofinger, Engelbert, Dr.Dr.

(56) Entgegenhaltungen:
- WO-A-94/15833
- DE-A- 2 060 761
- DE-B- 1 183 455
- GB-A- 942 296
- US-A- 5 556 189

## Beschreibung

Die Erfindung bezieht sich auf ein Markierungselement für Fahrbahnen, mit einem zylindrischen Gehäuse, in welchem mindestens eine Lichtquelle angeordnet ist, deren Licht durch eine mit der Fahrbahn bündige ebene Grenzfläche eines durchsichtigen Teiles des Deckels des Gehäuses austritt, wobei das von der Lichtquelle kommende Licht im Inneren des Deckels unter einem Winkel zur Grenzfläche verläuft, welcher nahe dem Grenzwinkel für Totalreflexion liegt.

Bei einer bekannten derartigen Einrichtung (vgl. GB 966 357) sind Lichtquellen vorgesehen, welche in einem rechteckigen Rahmen angeordnet sind, wobei die Abstrahlrichtung parallel zu zwei Seiten des Rahmens liegt. Die Halterung für die Lichtquellen ist fest mit dem Gehäuse verbunden. Der davon getrennte Deckel ist mittels Schrauben an vorgegebenen Bohrungen des Gehäuses in definierter Lage zu befestigen.

Die DE 11 83455 offenbart ein Markierungselement gemäß dem Oberbegriff des Anspruchs 1.

Nachteilig an der bekannten Anordnung ist, daß das Gehäuse ganz präzise eingebaut werden muß, um die vorgeschriebene Abstrahlrichtung zu erzielen. Selbst wenn man genaue Montagearbeit voraussetzen kann, steht eine vorgegebene Einbaurichtung für das Gehäuse oft in Konflikt mit dem Wunsch, Stromversorgungskabel, welche aus einer bestimmten Richtung kommen, geradeaus ins Gehäuse zu führen.

Die vorliegende Erfindung bezieht sich auf ein Markierungselement gemäß Anspruch 1.

Die Erfindung vermeidet die dargestellten Nachteile dadurch, daß die Lichtquelle mechanisch mit dem Deckel verbunden ist, welcher in unterschiedlichen Winkelstellungen mit dem Gehäuse verbindbar ist.

Eine besonders einfache konstruktive Durchführung dieses Gedankens ergibt sich, wenn zur lösbaren Verbindung von Deckel und Gehäuse konische Spannringe vorgesehen sind, welche durch im Deckel drehbar angeordnete Schrauben gegen die Innenwand des Gehäuses spannbar sind.

Durch die erfindungsgemäßen Maßnahmen ist es möglich, das Gehäuse in beliebiger Winkellage, insbesondere unter Bedachtnahme auf die einfache Kabelzuführung zu montieren und dennoch die gewünschte Abstrahlrichtung zu erzielen.

Weitere Einzelheiten der Erfindung werden anschließend anhand der Zeichnung erläutert.

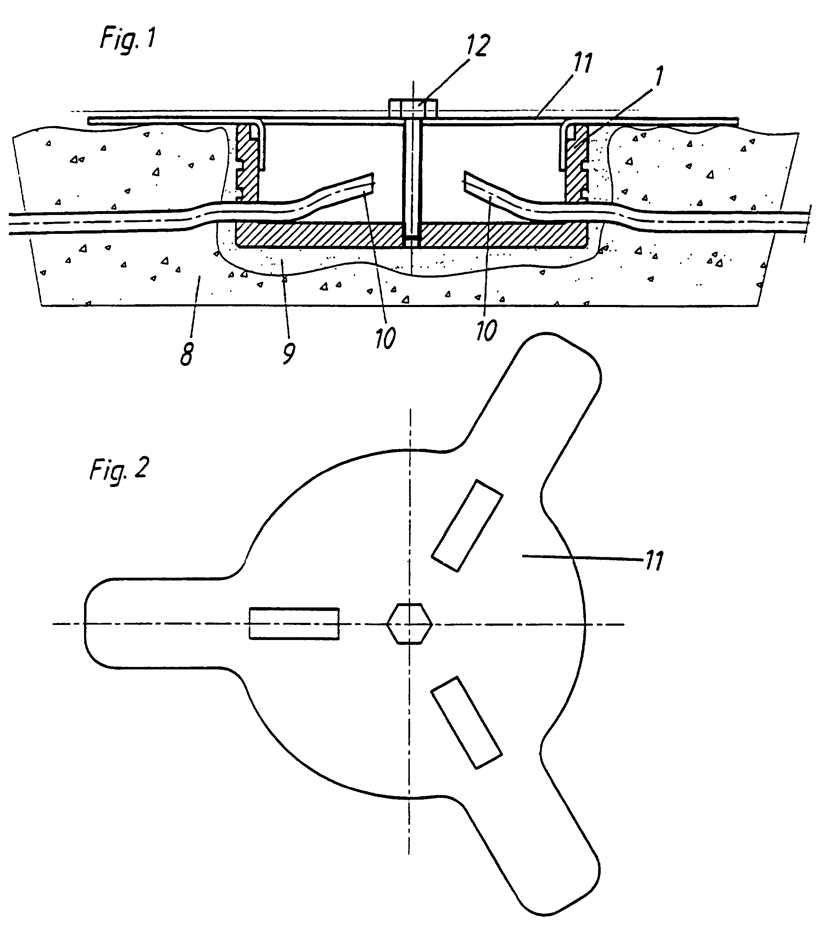

Fig. 1 zeigt einen Querschnitt durch das Gehäuse eines Markierungselementes während der Montage,
Fig. 2 die Draufsicht auf die in Fig. 1 verwendete Montagelehre,
Fig. 3 einen Querschnitt durch das fertig montierte Markierungselement,
Fig. 4 die zugehörige Draufsicht, und
Fig. 5 einen Querschnitt durch ein Leuchtelement.

Zur Montage des erfindungsgemäßen Markierungselementes wird in den Straßenbelag 8 eine Bohrung 9 eingefräst, in welche die Enden des im Belag verlegten Kabels 10 münden. Um das Gehäuse 1 vorläufig zu fixieren, ist eine Montagelehre 11 in Form eines Bleches vorgesehen, welche mittels der Schraube 12 mit dem Gehäuse 1 verbunden ist. Nach dem Vergießen des zwischen Straßenbelag 8 und Gehäuse 1 verbleibenden Zwischenraumes wird die Montagelehre 11 entfernt.

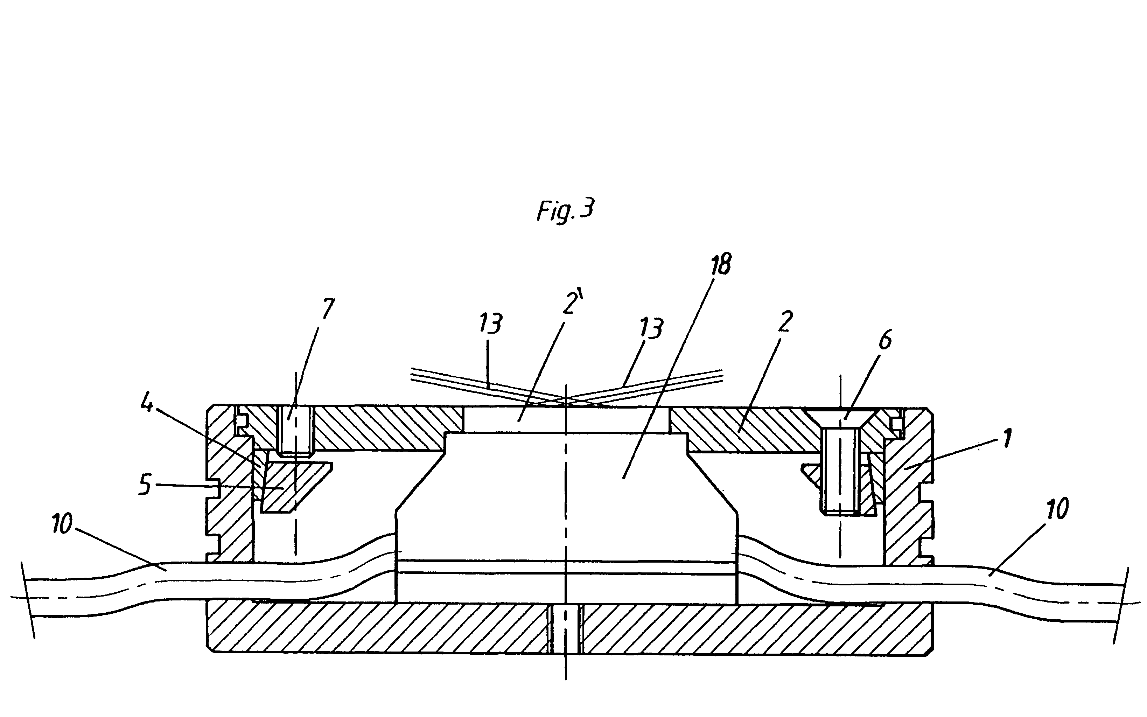

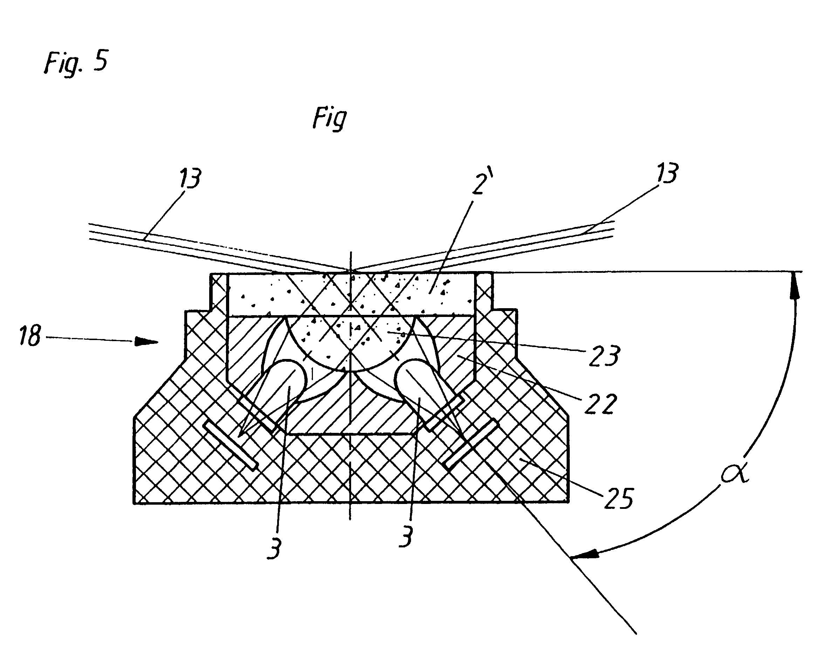

Nunmehr wird, wie aus Fig. 3 ersichtlich, ein Leuchtelement 18 in das Gehäuse eingesetzt, aus welchem Licht 13 in zwei entgegengesetzten Richtungen sehr flach austritt. Der Aufbau eines derartigen Leuchtelementes 18 ist beispielsweise aus Fig. 5 ersichtlich: Als Leuchtdioden ausgebildete Lichtquellen 3 werden in einem Reflektorgehäuse 22 aus Aluminium oder Kunststoff gehalten. Das unter einem Öffnungswinkel von etwa 25° austretende Licht wird über die Linse 23 aus Glas oder Kunststoff größtenteils parallelisiert. Das Licht durchdringt die Deckplatte 2' und wird beim Austritt in die Luft vom Lot weg in Richtung eines horizontalen Austrittes gebrochen. Der zwischen der LED-Mittelachse und der horizontalen Austrittsebene eingeschlossene Winkel α liegt nahe dem Grenzwinkel zur Totalreflexion und wird bestimmt durch den Brechungsindex des Linsen- und Deckplattenmaterials. Die Deckplatte 2' kann sowohl aus Glas als auch aus PMMA oder Polycarbonat gefertigt werden. Im Falle einer Kunststoffausführung ist eine Kratzfestbeschichtung oder ein dünnes Glaslaminat vorgesehen. Zur elektrischen und klimatischen Abdichtung ist das gesamte Modul in ein elastomeres Gehäuse 25 eingegossen, welches neben der Isolierung auch Dämpfungsfunktion hat.

Das Leuchtelement 18, welches eine in Draufsicht rechteckige Form aufweist, ist fest mit einem Deckel 2 verbunden bzw. bildet die durchsichtige Deckplatte 2' des Leuchtelementes 18 einen Teil des Deckels 2. Eine Verdrehung des Deckels 2 führt somit zu einer entsprechenden Änderung der Austrittsrichtung der Lichtstrahlen 13.

Um den Deckel 2 in verschiedenen Winkellagen fixieren zu können, erfolgt seine Befestigung mittels konischer Spannringe 4, 5, welche durch Anziehen mehrerer im Umfang angeordneter Schrauben 6 gegen die Innenwand des Gehäuses 1 verspannt werden.

Um das Gehäuse auch nach mehreren Jahren und in verschmutztem und korrodiertem Zustand stets öffnen zu können, werden mehrere am Umfang verteilte Madenschrauben 7 nach dem Öffnen der Spannschrauben 6 gegen den Spannring 5 gedrückt und lösen die Spannringverbindung.

Da bei der Installation der Gehäuse davon ausgegangen werden muß, daß sowohl die Fahrbahnbeschaffenheiten, der Streckenverlauf als auch der Verarbeiter Einfluß auf die endgültige Lage des Knopfes hat, bietet dieses System die Möglichkeit, die Position des Deckels und somit die Ausrichtung des austretenden Lichtes in einem Winkel von +/- 180° frei zu bestimmen. Diese Tatsache führt ebenso dazu, daß die Zuführung des Kabels aus jeder beliebigen Richtung erfolgen kann und damit eine freie Gestaltung von Lichtsignalen längs, quer oder in definierten Konturen auf der Fahrbahn möglich ist.

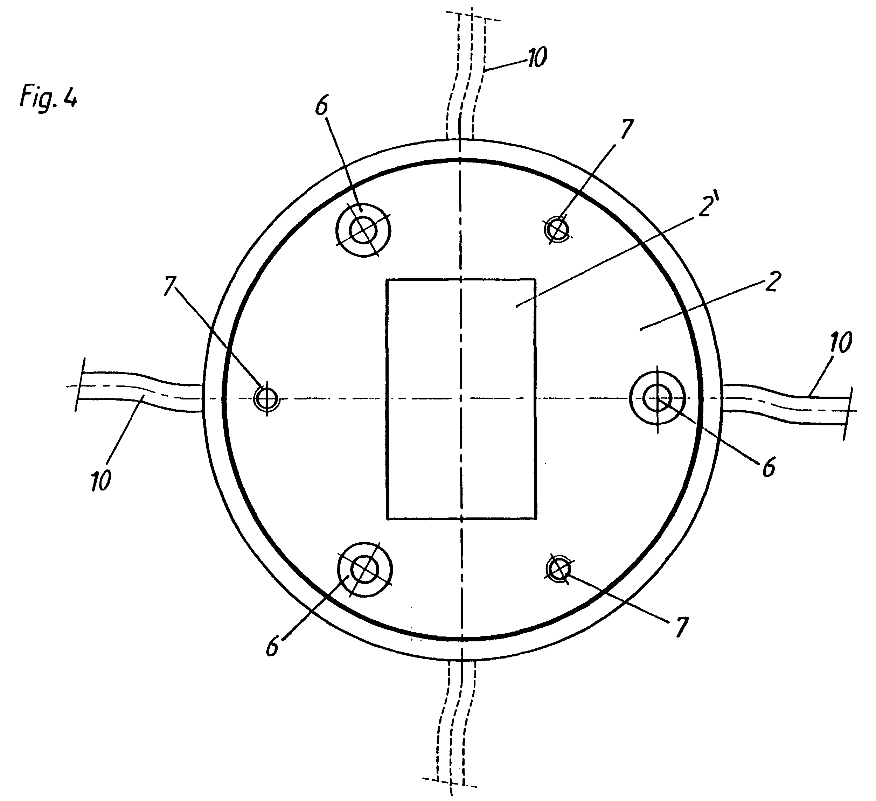

Um gegebenenfalls eine zu starke Umlenkung der Kabel 10 innerhalb des Gehäuses 1 zu vermeiden, können an gegenüberliegenden Stellen des Gehäuses 1 zwei Paare von Durchbrüchen für die Kabel 10 vorgesehen sein, wie dies in Fig. 4 angedeutet ist.

## Patentansprüche

1. Markierungselement für Fahrbahnen, mit einem zylindrischen Gehäuse, in welchem mindestens eine Lichtquelle angeordnet ist, deren Licht durch eine mit der Fahrbahn bündige ebene Grenzfläche eines durchsichtigen Teiles des Deckels des Gehäuses austritt, wobei das von der Lichtquelle kommende Licht im Inneren des Deckels unter einem Winkel zur Grenzfläche verläuft, welcher nahe dem Grenzwinkel für Totalreflexion liegt, wobei die Lichtquelle mechanisch mit dem Deckel verbunden ist, **dadurch gekennzeichnet, daß** der Deckel in unterschiedlichen Winkelstellungen mit dem Gehäuse verbindbar ist und daß zur lösbaren Verbindung von Deckel (2) und Gehäuse (1) konische Spannringe (4,5) vorgesehen sind, welche durch im Deckel (2) drehbar angeordnete Schrauben (6) gegen die Innenwand des Gehäuses (1) spannbar sind.

2. Markierungselement nach Anspruch 1, **dadurch gekennzeichnet, daß** im Deckel (2) Madenschrauben (7) angeordnet sind, welche den inneren Spannring (5) nach unten drücken können.

3. Markierungselement nach Anspruch 1 oder 2, **dadurch gekennzeichnet, daß** das von der Lichtquelle (3) kommende Licht durch mindestens eine Linse (23) abgelenkt wird, welche mit dem Deckel (2) zu einer Einheit verbunden ist.

4. Markierungselement nach Anspruch 3, **dadurch gekennzeichnet, daß** die Linsen (23) mit einem die Lichtquelle (3) umgebenden Reflektorgehäuse (22) verbunden sind.

5. Markierungselement nach Anspruch 4, **dadurch gekennzeichnet, daß** die Linsen (23) samt dem Reflektorgehäuse (22) in ein elastomeres Gehäuse (25) eingegossen sind.

## Claims

1. A marking element for carriageways with a cylindrical housing, in which at least one light source is arranged, whose light issues through a flat boundary surface, flush with said carriageway, of a transparent part of the cover of the housing, wherein the light coming from the light source extends in the interior of the cover to the boundary surface at an angle which is close to the limit angle of total reflection, wherein the light source is mechanically connected to the cover, **characterized in that** the cover is connectable to the housing in different angular positions and **in that**, for releasable connection of the cover (2) and the housing (1), conical tension rings (4, 5) are provided, which are being tensable against the inner wall of the housing (1) by screws (6) rotatably arranged in the cover (2).

2. A marking element according to claim 1, **characterised in that** in the cover (2) grub screws (7) are arranged which can push the inner stressing ring (5) downwards.

3. A marking element according to claim 1 or 2, **characterised in that** the light coming from the light source (3) is deflected through at least one lense (23), which is connected with the cover (2) to form a unit.

4. A marking element according to claim 3, **characterised in that** the lenses (23) are connected to a reflector housing (22) surrounding the light source (3).

5. A marking element according to claim 4, **characterised in that** the lenses (23), together with the reflector housing (22), are cast into an elastomer housing (25).

## Revendications

1. Elément de marquage utilisé pour des chaussées, comprenant un boîtier cylindrique dans lequel est disposée au moins une source lumineuse dont la lumière sort par une surface limite plane - à fleur de la chaussée - d'une partie transparente du couvercle du boîtier, où la lumière provenant de la source lumineuse passe à l'intérieur du couvercle en formant un angle par rapport à la surface limite, lequel angle est proche de l'angle limite pour une réflexion totale, où la source lumineuse est reliée, mécaniquement, au couvercle,
**caractérisé**
**en ce que** le couvercle peut, dans différentes positions angulaires, être relié au boîtier, et
**en ce que** des bagues de serrage coniques (4, 5) sont prévues pour l'assemblage amovible du couvercle (2) et du boîtier (1), lesquelles bagues de serrage peuvent être serrées contre la paroi intérieure du boîtier (1), grâce à des vis (6) disposées en pouvant tourner dans le couvercle (2).

2. Elément de marquage selon la revendication 1, **caractérisé en ce que** des vis sans tête (7) sont disposées dans le couvercle (2), lesquelles vis sans tête peuvent comprimer vers le bas la bague de serrage intérieure (5).

3. Elément de marquage selon la revendication 1 ou 2, **caractérisé en ce que** la lumière provenant de la source lumineuse (3) est déviée par au moins une lentille (23) qui est assemblée avec le couvercle (2) pour former un ensemble unitaire.

4. Elément de marquage selon la revendication 3, **caractérisé en ce que** les lentilles (23) sont assemblées avec un boîtier de réflecteur (22) entourant la source lumineuse (3).

5. Elément de marquage selon la revendication 4, **caractérisé en ce que** les lentilles (23) ainsi que le boîtier de réflecteur (22) sont scellés dans un boîtier élastomère (25).
